# EUROPEAN PATENT SPECIFICATION

(11) **EP 3 922 096 B1**
(45) Date of publication and mention of the grant of the patent: **08.01.2025**
(21) Application number: 20382493.3
(22) Date of filing: 08.06.2020
(51) Int. Cl.: A01G 13/02

(54) **AGRICULTURAL MULCH FILM**
LANDWIRTSCHAFTLICHE MULCHFOLIE
FILM DE PAILLAGE AGRICOLE

(43) Date of publication of application: 15.12.2021
(73) Proprietor: Reyenvas, S.A., 41500 Alcalá de Guadaira, Sevilla (ES)
(72) Inventor: Álvarez Aldoma, José Ramón, 41500 Alcalá de Guadaíra, Sevilla (ES)
(74) Representative: Bardehle Pagenberg S.L.

(56) References cited:
- WO-A1-2019/202420
- CN-A- 106 888 871
- DE-B3- 102010 047 591
- US-A1- 2006 280 923

## Description

The present disclosure relates to agricultural mulch films, and more in particular to agricultural mulch films including one or more degradable layers, having different capacities of light absorption.

### BACKGROUND

Mulch films are widely used in agricultural applications. Agricultural mulch films may be extended over a cultivation area. Some weight may be placed on the film, e.g. by burying the sides of the film or by placing soil or mass in bags incorporated in the film, to keep the film in place. Agricultural mulch films protect crops and soil from weathering, and help to avoid or at least reduce loss of water and fertilizers in the soil. They are also used to decrease the presence of weeds and regulate the interaction of sunlight with the crop and the soil. The sunlight and heat received by the crop and the soil has a direct influence on crop yield, e.g. the amount of crop that may be harvested, and on the moment when it can be harvested (precocity) and its quality. Agricultural multilayer mulch films are known from e.g. US2006/280923 A1 and WO2019/202420 A1. These film's layers may be adjusted to degrade according to specific needs.

Different types of agricultural mulch films are currently available, and a type of mulch film may be selected depending on a desired outcome. For instance, a transparent film maximizes the sunlight that reaches the soil, increasing soil temperature and boosting plant growth. An opaque or semi-opaque film, e.g. a black mulch film, hampers weeds growth and keeps the soil warm. A photoselective mulch film lets specific radiation pass through the film. For example, only photosynthetically active radiation (PAR) may pass through the photoselective film. Agricultural mulch films may also be configured as bicolor films. A bicolor film has its two faces of different colors. For instance, a bicolor film may have a black face and a white, silver, green, brown or grey face. In general, any combination of colors is possible. If one face is white or silver, placing this face upwards, i.e. facing the sky and/or the sunlight, helps to reflect the sunlight that would irradiate the crop and/or decrease the temperature below the film. An additional lower black film may render the film opaque.

The needs of the crop, e.g. in terms of solar radiation, may vary during the crop growth and can depend on climate conditions. In order to regulate the sunlight and temperature received by the crop and the soil, one may think about extending a first agricultural mulch film, and then replacing it with a different film when the needs of the crop have changed. Another option may be placing a bicolor mulch film, e.g. with a black face facing upwards, and later turning the film around, e.g. such that a white face faces upwards instead. However, none of these options are very efficient in terms of the use of resources, e.g. number of mulch films (in the first option), workforce and time needed for replacement. Also, depending on the crop, e.g. if the crop grows above and/or over the mulch film, it may not be even possible to turn around the mulch film without damaging the crop.

The above mentioned shortcomings are overcome with a mulch film according to claim 1. Further advantageous embodiments are covered by the dependent claims.

### SUMMARY

According to the invention, an agricultural mulch film is provided, which comprises a first layer having a first capacity of light absorption, and a second layer, having a second capacity of light absorption different from the first capacity of light absorption, and wherein the first layer is configured to be removed from the second layer after a period of time.

In accordance with this aspect, a film is provided that instead of having to e.g. flip a mulch film to expose another face of the film, or to substitute a film for another as the needs of the crop change over time, the film may be tailored or engineered to have the suitable varying characteristics over time. The first layer may be configured to degrade, and specifically to degrade more quickly than the second layer and/or the first layer may be configured to be removable from the second layer.

Throughout this disclosure, a capacity of light absorption may be understood as a capacity of a layer of a mulch film to absorb a certain amount of incident electromagnetic energy (e.g. sunlight) in a certain way. A change in capacity of light absorption may be understood as a change in the light (e.g. wavelength and/or amplitude) that is reflected, absorbed, and/or transmitted by a layer. Thus, a change in capacity of light absorption may include a change in at least one of transparency, opacity, translucency, photoselectivity, color and the like of a layer.

Herein, a change in capacity of light absorption may be related to a layer, and in particular to its composition. It may not be related to a variation of incident light, e.g. due to weather changes or sun movement (sunrise, sunset), over time, e.g. during a day. Thus, different layers with same dimensions (e.g. length, width) and shape may have different capacities of light absorption if their capacities of light absorption are distinct when exposed to a same light in the same conditions, e.g. sunlight.

In an example, two different layers of a mulch film have different capacities of absorption due to the fact that they are at least of different colors, e.g. one may be green, and the other may be black. In another example, two different layers of a mulch film have different capacities of absorption as they have at least different opacities (e.g. opacities that differ in at least 5%). Still in another example, two different layers of a mulch film have different capacities of absorption due to the fact that at least their translucency is different (e.g. translucency differs in at least a 5% between layers).

In some examples, electromagnetic energy may be visible light, i.e. the portion of the electromagnetic spectrum that is visible to the human eye. Light and electromagnetic energy may be used interchangeably herein.

For each layer or a sublayer of an agricultural mulch film a capacity of light absorption may be defined. A difference between the capacities of light absorption between layers may be significantly higher than an inevitable variation of the capacity of light absorption within the same layer due to the manufacturing process.

According to the invention the first layer has a first degradation time and the second layer has a second degradation time, the second degradation time being different from the first degradation time. In this or other examples, the first layer may have a first rate of degradation and the second layer may have a second rate of degradation, which is different from the first rate of degradation.

Thus, a layer of a mulch film having a shorter degradation time may degrade faster and the optical and/or thermal properties of the mulch film may change accordingly. Advantageously, light and heat received by a crop may be modified in a controlled and efficient way. The speed of degradation of the first and the second layers may be adapted to the crop being grown, e.g. a certain type of vegetable, and/or to climate conditions, e.g. a crop growing towards the winter or a crop growing towards the summer. The latitude where a crop may be growing may be also considered. The terms degradation rate, degradation speed and speed of degradation may be used interchangeably herein.

A rate of degradation may be defined as quantity of material that degrades per unit of time. A unit of time may be e.g. a month, a few months or a year. Different layers may have different degradation rates if the degradation rate of a layer differs from the degradation rate of another layer by at least 20%, i.e. 20% more or less material is degraded in the same unit of time.

A degradation time may mean a period of time in which substantially at least 90% of a layer has degraded, eroded, decomposed or disappeared. Different layers having different degradation times may be understood to mean that in use, the different layers have times of degradation that differ at least 10%, and more specifically at least 20%. As an example, a degradation time of one layer may be 150 days. Another layer having a different degradation time means that it has a degradation time of either 135 days or less, or 165 days or more; and more specifically 120 days or less, or 180 days or more.

The first layer of the agricultural mulch film may be a top layer of the film, and the second layer may be a bottom layer of the film. In this example, the top layer may have a shorter degradation time than the bottom layer, and specifically the top layer may have a higher rate of degradation than the bottom layer. Accordingly, the top layer of the film may degrade faster and may leave a lower layer, or the bottom layer if the mulch film includes two layers only, with a different capacity of light absorption uncovered. The top layer is the one that absorbs and/or reflects incoming light to a certain extent. The top layer is also the layer that is most visible and most easily inspected. If the top layer degrades faster, it is easy to know how the properties of the mulch film are changing/have changed by visual inspection. In some other examples, the bottom layer has a speed of degradation higher than a speed of degradation of an upper layer. The interaction of a bottom side of the film with crop and soil may thus be changed over time.

Also, some crops may grow above and over the mulch film. In this case, regulation of light and temperature conditions may be performed easily and without damaging or stressing the crop, e.g. in comparison with a situation where people replace or turn around a mulch film.

Degradation times of the mulch film layers together with capacity of light absorption of the upper and lower layers, e.g. a top and a bottom layer, of the mulch film may be varied in order to tailor a mulch film to the needs of a specific crop.

A degradation time of a layer may be a function of a thickness of a layer of film as well as the material of the layer of the film having a certain degradation rate or degradation speed. Additives such as e.g. UV stabilizers may also play a role in the degradation rate. These three aspects, namely thickness, material and additives, may be chosen and adapted (e.g. which materials/additives and in which proportion, and which layer thickness are to be used) to tailor a degradation time or a degradation rate.

A "layer" as used throughout the present disclosure may be regarded as a portion or section of a film which is arranged on top or below one or more further layers. A layer generally extends over the entire length and width of the film. A layer may include a plurality of sublayers. For example, an agricultural mulch film may include e.g. 5, or 7 or 9 or more sublayers. Purely by way of example, when the film comprises 9 sublayers in total, e.g. the first 5 of these sublayers may constitute the first layer, and the other sublayers may constitute a second and/or a third layer. In another example, if the film comprises 9 sublayers, the first 3 sublayers may be regarded as constituting the first layer, and the remaining 6 sublayers may constitute the second layer.

Degradable as used throughout the present disclosure may be understood as that the material or layer is configured to degrade, i.e. break-down, deteriorate or fragment during its normal use. In examples, degradable may mean that the layer or material will degrade within 1 year when exposed to a foreseen environment and weather conditions, and more specifically will degrade within 9 months or less. These times may enable the top layer to degrade according to the light and/or temperature needs of specific crops, and also to the season towards which the crop will be growing. Eroding, degrading, and breaking down are used herein to mean the same process and are herein used interchangeably.

Biodegradable or compostable as used throughout the present disclosure may be understood as any material that is configured to erode, decompose or degrade by microorganisms, such as bacteria and fungi.

Accordingly, the biodegradable layers may decompose in soil, and collecting them or a portion of them may not be necessary. In addition, a compostable layer may help to fertilize the soil. In an example, all the layers are biodegradable.

One or more layers of the film may substantially be non-(bio)degradable or may barely be (bio)degradable. In some of these examples, the top layer of the mulch film is (bio)degradable, and the bottom layer of the mulch film is based on polyolefinic materials. The service life of the bottom layer may thus be longer.

In some examples, the top layer is configured to be removable from the film. This helps to regulate sunlight and temperature by removing the top layer of the film, no matter the degradation of the top layer. I.e., removing the top layer may be an alternative to waiting for the top layer to degrade for changing the properties of the mulch film. In addition, a removable top layer may be used as a security feature in combination with degradability of a layer. For instance, if a top layer is black, a bottom layer is white and temperature has started to increase before expected, the black top layer may be removed, e.g. mechanically or manually, in order to adapt the mulch film to the increase of temperature without needing to wait for the top layer to degrade.

In some examples, the first layer is of a first color and the second layer is of a second color different from the first color. In some of these examples, the bottom layer is black, and the top layer may be white, silver, green, brown, grey, transparent or translucent, or of any color different from black. Likewise, in some other examples, the top layer is black, and the bottom layer may be of any color which is not black. In this way, the advantages offered by the color of the top layer may be used first, and once the top layer is not present, the benefits offered by the color of the bottom layer may be enjoyed.

In a specific example, the upper layer may be white or silver, and the lower layer is black. If the upper layer degrades faster than the lower layer, the white or silver layer may help to reduce soil temperature in the initial stages of crop growth and, once the white or silver layer is no longer present, the black layer may help to increase the soil temperature. Such a mulch film may be useful when over time, the need for absorbance of heat and light increases, e.g. for crops growing towards the winter.

In another specific example, the upper layer may be black, and the lower layer may be white or silver. If the upper layer degrades faster than the lower layer, the black layer may increase the temperature of the soil and, when the black layer is no longer present, the white or silver layer may help to decrease soil temperature. Such a mulch film may be useful when going towards the summer.

The agricultural mulch film disclosed herein may have any number of layers. In some examples, in addition to the first and second layers, the mulch film comprises a third layer. Such a mulch film may have different structures.

The invention according to claim 1 covers two film layer configurations. In the first configuration, the mulch film has an A/B/B structure. In this case, in terms of degradability, a top layer A degrades at a first speed of degradation which is faster than a second speed of degradation of the other two lower layers B. According to the invention, layer A is biodegradable and according to some examples layers B are based on polyolefinic materials. In some other examples, layers A and B are biodegradable, and in particular layer A may degrade faster than layers B. In any of these examples, layer A may be removable from the film, e.g. manually. In the second configuration covered by claim 1, the invention concerns a film in an A/B/A structure, wherein the top and bottom layer have a first speed of degradation which is faster than a second speed of degradation of the middle layer.

A thickness of the mulch film may be between 10-200 microns, and specifically between 30 and 100 microns. A mulch film with a thickness in this range may be sufficiently strong and resistant to protect a crop at the same time that one or more of its layers may degrade at a required time or speed for an optimized crop growth.

In some examples, one or more layers include polyolefins. According to the invention the middle layer comprises polyolefins. Introducing polyolefinic materials into one or more layers enables to prolong the service time of such layers.

The proportion of biodegradable, compostable and/or polyolefinic materials included in each layer may be adjusted to the desired duration of that layer of the mulch film.

In any of these examples, a mulch film may include one or more pockets along one or more edges of the mulch film. Introducing some material into the one or more pockets, e.g. soil, sand and/or hygroscopic materials, may provide sufficient weight in order to fix the mulch film to the cultivation soil.

### BRIEF DESCRIPTION OF THE DRAWINGS

Non-limiting examples of the present disclosure will be described in the following, with reference to the appended figures, in which:
Figure 1 schematically represents a cross-section of an agricultural mulch film according to an example.
Figure 2 schematically illustrates a degradation of an upper layer of an agricultural mulch film according to an example.
Figure 3 schematically shows how an upper layer may be removed from an agricultural mulch film according to an example.
Figure 4 schematically represents a cross section of an agricultural mulch film according to another example.
Figure 5 schematically illustrates an example of an agricultural film for use with asparagus.
Figure 6 schematically illustrates a top view of an agricultural mulch film according to an example.
Figure 7 schematically illustrates a section of the agricultural mulch of figure 5.

The figures refer to example implementations and are only be used as an aid for understanding the claimed subject matter, not for limiting it in any sense.

### DETAILED DESCRIPTION OF EXAMPLES

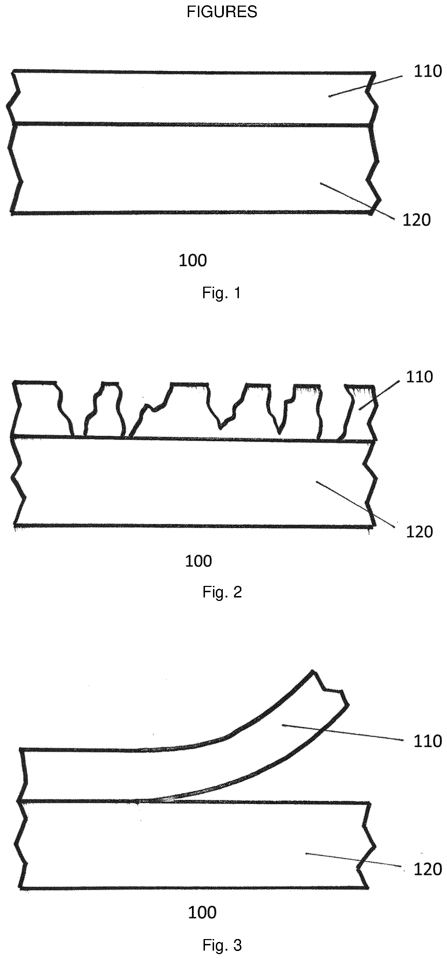

Figure 1 schematically represents a cross-section of an agricultural mulch film 100. The agricultural mulch film 100 includes a first layer 110 and a second layer 120. The first layer 110 may be a top layer, i.e. the layer of the mulch film 100 configured to be placed facing upwards, e.g. facing the sky and/or the sunlight. In this example, the second layer 120 is a bottom layer, i.e. the layer configured to be placed facing downwards, e.g. facing the soil. The first layer 110 and the second layer 120 have different capacities of light absorption, and the first layer 110 and the second layer 120 have different times or speeds of degradation.

The fact that the top 110 and bottom 120 layers of the mulch film 100 may degrade at different speeds means that the optical and/or thermal properties of the film 100 can change over time due to the difference in capacity of light absorption of each layer.

For instance, in some examples, the time and/or speed of degradation of the top layer 110 may be higher than the time and/or speed of degradation of the bottom layer 120. Therefore, the top layer 110 may degrade, as schematically illustrated in figure 2, and the bottom layer 120 may become exposed to sunlight after a given period of time. As the top 110 and bottom 120 layers have different capacities of light absorption, the optical and/or thermal properties of the mulch film 100 change with the degradation of the top layer 110. The light and/or heat reaching the soil may thus be adapted to the needs of the crop and/or climate conditions.

In some examples, the top layer 110 may degrade due to its composition, e.g. due to being made of biodegradable materials. Some biodegradable materials may further be compostable. In these or other examples, the top layer 110 may degrade due to the action of ultraviolet (UV) radiation. In some examples, the bottom layer 120 may be made of, or based on, polyolefinic plastic materials.

In another example, shown in figure 3, the top layer 110 may be configured to be removable from the film 100. Detaching the top layer 110, e.g. manually, enables changing the properties of the mulch film 100 without having to wait for the top layer 110 to degrade. The examples of figures 2 and 3 may be combined, i.e. a layer, e.g. the top layer 110, may be biodegradable and also detachable.

In an example, a mulch film 100 such as the mulch film 100 of the examples of figures 1-3, the top layer 110 may be white or silver and the bottom layer 120 may be black. Therefore, the top layer 110 may reduce the temperature below the film 100 and reflect sunlight until it degrades or is detached. When the darker bottom layer 120 is at least partially uncovered, the bottom layer 120 instead will absorb incoming light and thereby may increase the temperature below the film 100. Accordingly, this mulch film 100 may be used for crops growing towards the winter.

The opposite may be implemented for crops growing towards the summer, i.e., the top layer 110 may be black and the bottom layer 120 may be white or silver, so that at the appropriate time, the appropriate reflectivity and light absorbance are used.

In general, the top 110 and bottom 120 layers may be of any color, they do not need to be white, silver or black. Any suitable color pigment may be added to the different layers.

For instance, in some examples the bottom layer is black, and the top layer may be green, brown, grey, transparent, or of any color different from black. Likewise, in some other examples, the top layer is black, and the bottom layer may be of any color which is not black.

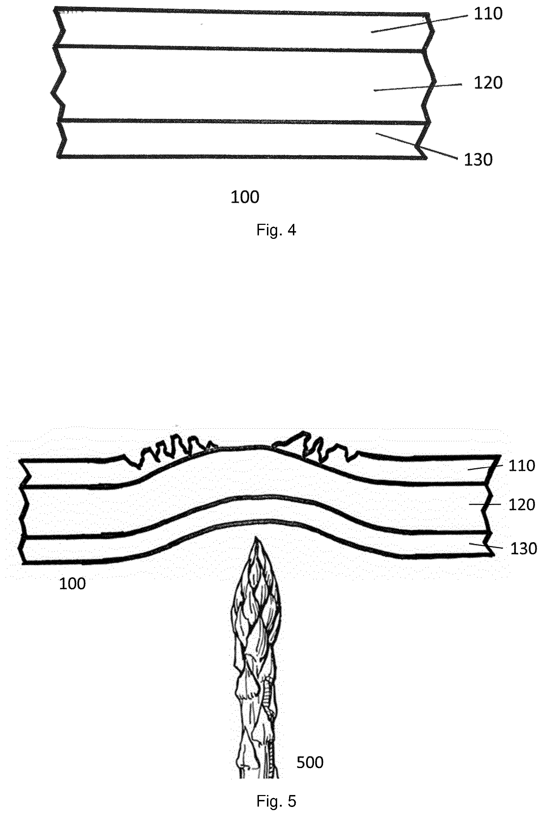

Figure 4 schematically shows another example of agricultural mulch film 100. In this example, the film 100 further comprises a third layer 130 below the second layer 120. In this example, layer 130 is the bottom layer, which in use is facing the soil.

In the example of figure 4, the speed and/or time of degradation and the capacity of absorption of each layer 110, 120, 130 may be configured to achieve the desired outcome.

In some examples, the speed of degradation decreases from the top layer 110 to the bottom layer 130. In this way, each of the three layers 110, 120, 130 may be exposed to sunlight with time and the properties of the mulch film 100 may be varied accordingly. In an example, the first 110 and second 120 layers are made of biodegradable materials and the third layer 130 is made mostly or exclusively of polyolefinic materials.

In some other examples, the third layer 130 has a speed and/or time of degradation substantially equal to the speed and/or time of degradation of the second layer 120. Such a mulch film 100 may then have an A/B/B structure. In an example, the first (top) layer 110 may be black, the second (middle) 120 layer may be white or silver, the third (bottom) 130 layer may be black, and the top layer 110 may degrade faster than the layers 120 and 130. Accordingly, the upper layer 110 may be configured to absorb irradiant (sun)light to increase the temperature below the film 100 first, and a bicolor film may remain when the top layer 110 is no longer present. The middle layer 120 may then reduce the temperature below the film 100 and reflect light towards the crop, and the bottom layer 130 may hamper weeds growth. Therefore, this mulch film 100 may be advantageous for crops growing towards the summer.

A mulch film 100 such as the one described in the paragraph above may provide additional advantages. This may be seen in figure 5. In figure 5, an asparagus 500 is growing below a mulch film 100 and pushing the film 100 upwards. The pressure exerted by the tip of the spear contributes to the fragmentation or breaking of the top black layer 110 weakened by degradation. Therefore, for an asparagus crop, or a crop which may affect the mulch film 100 in a similar way, the middle white or silver layer 120 becomes visible, e.g. in the form of white spots. Accordingly, which asparagus may need to be picked up may be easily seen, facilitating collection and increasing its efficiency. Additionally, the tips of the spears do not overheat.

According to some examples of the invention, the bottom layer 130 has a speed of degradation substantially equal to the speed of degradation of the top layer 110, and the middle layer is substantially not degradable. Such a mulch film 100 may have an A/B/A structure. In an example, the top 110 and bottom 130 sections are silver or white, and the middle section 120 is black.

In summary, each of the layers may have specific characteristics and may be provided with a specific objective in mind. Thanks to being able to engineer the degradation rate and/or time of the separate layers, a mulch film may be provided that can vary its characteristics over time.

In any of the examples of figures 1-5, the upper layer 110 may have a degradation time between one and nine months, and more in particular between three and six months. This range of degradation times enables to adapt the optical and/or thermal properties of a mulch film 100 to the growth times of different types of crops, and also to different climate conditions, e.g. due to season change. Other layers of the mulch film 100 may have degradations times in this range too.

A non-biodegradable layer or less biodegradable layer may have a degradation time that is longer than a degradation time of a degradable layer, e.g. more than 1 year.

Concerning (bio)degradability, a biodegradable layer, e.g. the upper layer 110, may include one or more of the following materials: polylactic acid (PLA), poly(butylene adipate-co- tereftalate) (PBAT), polyhydroxyalkanoates (PHA), polyhydroxybutyrate (PHB), polyhydroxyvaleriate (PHV), polyhydroxyhexanoate (PHH), butyrate-co-valerate (PHBV or P(3HB-co-3HV)), butyrate-co-hexanoate (PHBH or P(3HB-co-3HH)), starch and/or starch blends, poly (butylene succinate) (PBS), poly (butylene succinate-co-adipate) (PBSA) and polymers derived from proteins, e.g. milk proteins.

A non-(bio)degradable or less (bio)degradable layer of the mulch film 100 may include one or more of the following materials: polyethylene (PE), PE copolymers, polypropylene (PP), PP copolymers, ethylene vinyl acetate (EVA), ethylene butyl acrylate (EBA), polyamide (PA), ethylene vinyl alcohol (EVOH), polyvinyl alcohol (PVOH), polyethylene terephthalate (PET).

In an example, amounts of PBAT, PLA and/or starch are used to adjust the biodegradability of a layer, e.g. a top layer 110. The proportions of these materials may affect a degradation time and/or degradation speed of a layer. For instance, by varying the proportions of these materials, a degradation time between one and three months may be obtained.

Any of the layers of the mulch films 100 according to the present disclosure, may comprise one or more of the materials mentioned in the above paragraphs. In addition, one or more adhesive polymers may be added to the mulch film 100 to guarantee adherence between layers. In an example, maleic anhydride is included with one or more of the above polyolefinic plastic materials.

Also, the first, second and third layers 110, 120, 130 (and further layers) may be monolayer or multilayer, i.e. the layers may include sublayers. The first, second, and third layers may have a same or a different number of sublayers. The thickness of the layers included in the mulch film 100 may be different or the same. In the examples of figures 1-3, the thickness of the top 110 and bottom 120 layers is different. In some other examples, the thickness of the top 110 and bottom 120 layers may be substantially the same. In the example of figures 4 and 5, the top 110 and bottom 130 layers have a substantially same thickness which is lower than the thickness of the middle layer 120. In some other examples, the top 110, bottom 120 and middle 130 layers may have a substantially same thickness.

The number of layers, the materials used for each layer and the thickness of each layer may be selected according to desired properties of each layer, e.g. in terms of biodegradability. Additives may also be included to obtain the desired properties of a layer. A mulch film 100 may have more than three layers.

In an example, the total thickness of the mulch film 100 may be between 10 and 200 microns. In such an example, the mulch film 100 may have the following mechanical properties.

| EXAMPLE OF MECHANICAL PROPERTIES | | | |
|---|---|---|---|
| Magnitude | Value | Unit | Standard |
| Thickness | 10 - 200 | Microns | ISO 4591 |

| Tensile strength at break | | | |
|---|---|---|---|
| Longitudinal direction | 14 - 35 | MPa | EN ISO 527-3 |
| Transversal direction | 14 - 40 | MPa | EN ISO 527-3 |

| Tensile strain at break | | | |
|---|---|---|---|
| Longitudinal direction | 80 - 800 | % | EN ISO 527-3 |
| Transversal direction | 100 - 1200 | % | EN ISO 527-3 |

| Impact resistance | | | |
|---|---|---|---|
| Machine direction (MD) | 50 - 800 | g | ISO 7765-1 |

In such an example, a biodegradable layer comprised in the mulch film 100 may have a thickness between 2 and 100 microns. For instance, in figure 4 layer 110 may be biodegradable and it may have a thickness of 10 microns. In this example, layers 120 and 130 may be based on polyolefinic materials and each of them may have a thickness of 35 microns. Therefore, the mulch film 100 may have a total thickness of 80 microns in this example.

In an example, the top layer may be black (or another color with low reflectance and relatively high absorbance of light), the middle layer may be white, and the bottom layer may be black. After degradation of the top layer, the remaining layer may have a top white layer, and a bottom black layer.

A mulch film 100 according to any of the examples disclosed herein may be manufactured in several ways. In an example, the mulch film 100 may be manufactured by coextruding two or more layers or sublayers including any of the materials mentioned above. For example, one or more types of polymer pellets may be melted and shaped into a layer or sublayer. Additives, such as coloring agents, may be melted with the pellets. Two or more layers or sublayers may be then coextruded to manufacture the mulch film 100. Such a coextrusion process may include blowing and/or calendaring, as well as orientation of the film. The film may be oriented in a longitudinal direction (machine direction) and/or a transversal direction. In another example, two or more layers or sublayers including any of the materials mentioned above may be stacked together by lamination, e.g. adhesive lamination or hot-roll lamination. Other manufacturing processes may be possible.

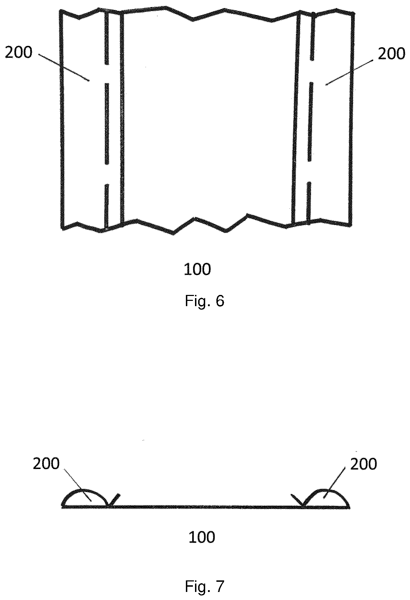

Figures 6 and 7 schematically illustrate a top view and a cross sectional view, respectively, of an agricultural mulch film 100 with pockets 200 along two of the edges of the mulch film 100, e.g. along a longitudinal direction of the mulch film 100. Pockets 200 may be filled with soil, land and/or moisture absorbing substances to avoid the movement of the mulch film 100 with respect to the cultivation area. In general, any number of pockets may be included to any number of edges or laterals of the mulch film 100.

In a preferred example, the pockets may be integrally formed with the film.

Although only a number of examples have been disclosed herein, other alternatives, modifications, uses and/or equivalents thereof are possible. The scope of the invention is only limited by the claims that follow.

## Claims

1. An agricultural mulch film comprising:
a biodegradable top layer having a first capacity of light absorption and a first speed of degradation,
a substantially non-degradable middle layer based on polyolefinic materials, having a second capacity of light absorption different from the first capacity of light absorption and a second speed of degradation which is lower than the first speed of degradation,
a bottom layer having the first speed of degradation or the second speed of degradation, and
one or more adhesive polymers adhering the middle layer and the top layer.

2. The agricultural mulch film of claim 1, wherein the bottom layer has the second speed of degradation and is based on polyolefinic materials.

3. The agricultural mulch film of claim 1, wherein the bottom layer is biodegradable.

4. The agricultural mulch film of any of claims 1 - 3, wherein the top layer is further configured to be manually or mechanically removable from the film.

5. The agricultural mulch film of any of claims 1 - 4, wherein the top layer is of a first color and the middle layer is of a second color different from the first color.

6. The agricultural mulch film of claim 5, wherein the top layer is white or silver and the middle layer is black.

7. The agricultural mulch film of claim 6, wherein the bottom layer is white or silver.

8. The agricultural mulch film of claim 5, wherein the top layer is black and the middle layer is white or silver.

9. The agricultural mulch film of claim 8, wherein the bottom layer is black.

10. The agricultural mulch film according to any of claims 1-9, wherein a thickness of the film is between 10 - 200 microns, and specifically between 30 and 100 microns.

11. The agricultural mulch film of any of claims 1-10, wherein the top layer is biodegradable and having a degradation time between one and nine months, and more in particular between three and six months.

12. The agricultural mulch film of any of claims 1-11, wherein one or more layers different from the top layer include polyolefins.

13. The agricultural mulch film of any of claims 1-12, wherein one or more of the layers comprises a plurality of sublayers.

14. The agricultural mulch film of any of claims 1-13, further including one or more pockets along one or more edges of the mulch film.

## Patentansprüche

1. Eine landwirtschaftliche Mulchfolie, die Folgendes umfasst:
eine biologisch abbaubare Deckschicht mit einem ersten Lichtabsorptionsvermögen und einer ersten Abbaugeschwindigkeit,
eine im wesentlichen nicht abbaubare Mittelschicht auf der Basis von polyolefinischen Materialien mit einem zweiten Lichtabsorptionsvermögen, das sich von dem ersten Lichtabsorptionsvermögen unterscheidet, und einer zweiten Abbaugeschwindigkeit, die niedriger ist als die erste Abbaugeschwindigkeit,
eine untere Schicht, die die erste oder die zweite Abbaugeschwindigkeit aufweist, und
ein oder mehrere klebende Polymere, die die mittlere Schicht und die obere Schicht verkleben.

2. Die landwirtschaftliche Mulchfolie nach Anspruch 1, wobei die untere Schicht die zweite Abbaugeschwindigkeit aufweist und auf polyolefinischen Materialien basiert.

3. Die landwirtschaftliche Mulchfolie nach Anspruch 1, wobei die untere Schicht biologisch abbaubar ist.

4. Die landwirtschaftliche Mulchfolie nach einem der Ansprüche 1 bis 3, wobei die obere Schicht außerdem so konfiguriert ist, dass sie manuell oder mechanisch von der Folie entfernt werden kann.

5. Die landwirtschaftliche Mulchfolie nach einem der Ansprüche 1 bis 4, wobei die obere Schicht eine erste Farbe und die mittlere Schicht eine zweite, von der ersten Farbe verschiedene Farbe aufweist.

6. Die landwirtschaftliche Mulchfolie nach Anspruch 5, wobei die obere Schicht weiß oder silbern und die mittlere Schicht schwarz ist.

7. Die landwirtschaftliche Mulchfolie nach Anspruch 6, wobei die untere Schicht weiß oder silbern ist.

8. Die landwirtschaftliche Mulchfolie nach Anspruch 5, wobei die oberste Schicht schwarz und die mittlere Schicht weiß oder silberfarben ist.

9. Die landwirtschaftliche Mulchfolie nach Anspruch 8, wobei die untere Schicht schwarz ist.

10. Die landwirtschaftliche Mulchfolie nach einem der Ansprüche 1 bis 9, wobei die Dicke der Folie zwischen 10 und 200 Mikrometern und insbesondere zwischen 30 und 100 Mikrometern liegt.

11. Die landwirtschaftliche Mulchfolie nach einem der Ansprüche 1 bis 10, wobei die oberste Schicht biologisch abbaubar ist und eine Abbauzeit zwischen einem und neun Monaten und insbesondere zwischen drei und sechs Monaten aufweist.

12. Die landwirtschaftliche Mulchfolie nach einem der Ansprüche 1 bis 11, wobei eine oder mehrere von der obersten Schicht verschiedene Schichten Polyolefine enthalten.

13. Die landwirtschaftliche Mulchfolie nach einem der Ansprüche 1 bis 12, wobei eine oder mehrere der Schichten eine Vielzahl von Unterschichten umfasst.

14. Die landwirtschaftliche Mulchfolie nach einem der Ansprüche 1 bis 13, die außerdem eine oder mehrere Taschen entlang einer oder mehrerer Kanten der Mulchfolie aufweist.

## Revendications

1. Un film de paillage agricole comprenant :
une couche supérieure biodégradable ayant une première capacité d'absorption de la lumière et une première vitesse de dégradation,
une couche intermédiaire essentiellement non dégradable à base de matériaux polyoléfiniques, ayant une deuxième capacité d'absorption de la lumière différente de la première capacité d'absorption de la lumière et une deuxième vitesse de dégradation inférieure à la première vitesse de dégradation,
une couche inférieure ayant la première vitesse de dégradation ou la seconde vitesse de dégradation, et
un ou plusieurs polymères adhésifs adhérant à la couche intermédiaire et à la couche supérieure.

2. Le film de paillage agricole de la revendication 1, dans lequel la couche inférieure a la deuxième vitesse de dégradation et est basée sur des matériaux polyoléfiniques.

3. Le film de paillage agricole de la revendication 1, dans lequel la couche inférieure est biodégradable.

4. Le film de paillage agricole de l'une des revendications 1 à 3, dans lequel la couche supérieure est en outre configurée pour être retirée manuellement ou mécaniquement du film.

5. Le film de paillage agricole de l'une des revendications 1 à 4, dans lequel la couche supérieure est d'une première couleur et la couche intermédiaire d'une seconde couleur différente de la première.

6. Le film de paillage agricole de la revendication 5, dans lequel la couche supérieure est blanche ou argentée et la couche intermédiaire est noire.

7. Le film de paillage agricole de la revendication 6, dans lequel la couche inférieure est blanche ou argentée.

8. Le film de paillage agricole de la revendication 5, dans lequel la couche supérieure est noire et la couche intermédiaire est blanche ou argentée.

9. Le film de paillage agricole de la revendication 8, dans lequel la couche inférieure est noire.

10. Le film de paillage agricole selon l'une des revendications 1 à 9, dans lequel l'épaisseur du film est comprise entre 10 et 200 microns, et plus particulièrement entre 30 et 100 microns.

11. Le film de paillage agricole de l'une des revendications 1 à 10, dans lequel la couche supérieure est biodégradable et a un temps de dégradation compris entre un et neuf mois, et plus particulièrement entre trois et six mois.

12. Le film de paillage de l'une des revendications 1 à 11, dans lequel une ou plusieurs couches différentes de la couche supérieure comprennent des polyoléfines.

13. Le film de paillage agricole de l'une des revendications 1 à 12, dans lequel une ou plusieurs des couches comprennent une pluralité de sous-couches.

14. Le film de paillage de l'une des revendications 1 à 13, comprenant en outre une ou plusieurs poches le long d'un ou de plusieurs bords du film de paillis.
